# EUROPEAN PATENT SPECIFICATION

(11) **EP 3 798 509 B1**
(45) Date of publication and mention of the grant of the patent: **02.11.2022**
(21) Application number: 19200471.1
(22) Date of filing: 30.09.2019
(51) Int. Cl.: F21V 15/01, F21V 8/00

(54) **PANEL LIGHT**
FLÄCHENLEUCHTE
ÉCLAIRAGE DE PANNEAU

(43) Date of publication of application: 31.03.2021
(73) Proprietor: Thorn Lighting Limited, Spennymoor, Durham DL16 6HL (GB)
(72) Inventor: Cook, David, Spennymoor, Durham DL 16 7UR (GB); Maughan, Steve, Spennymoor, Durham DL16 7HL (GB); Pilkington, Gary, Browney, Durham (GB); Stockley, Paul, Heighington, Durham DL56RL (GB); Bowness, Anton, Shiremoor, Newcastle Upon Tyne (GB)
(74) Representative: Kiwit, Benedikt

(56) References cited:
- CN-A- 102 691 918
- DE-U1- 8 807 329
- US-A1- 2011 051 457

## Description

The present invention refers to a panel light with a frame body, an LED-module and a light passage panel covering an opening in the frame body to allow light emitted by the LED-module exiting the panel light via the light passage panel and the opening.

Panel lights are well-known in the prior art. Usually, their respective components, namely the LED-modules on the one hand and the light passage panel which may comprise different optical elements on the other hand are individually placed within the frame body. These elements are then individually positioned and, independently from each other, somehow aligned with respect to the frame body, e.g. by separate fixing means or other additional components for positioning the respective features and fixing them together. The known components have a comparably high variety in tolerances which complicate an overall alignment of the luminaire elements to avoid lighting deficiencies, like bright spots.

It is thus an object of the present invention to provide a panel light, which allows for easier and better alignment of its functional lighting components.

The object is achieved by the subject-matter of the independent claim. The dependent claims study further the central idea of the present invention in a preferable manner.

From DE 8807 329 U1 5 a picture frame with discreet illumination is known and comprises a support frame, an ornamental frame, and a lighting unit along the ornamental frame that is inserted in the support frame.

From US 2011/051457 A1 a ceiling mounted LED lamp is known and comprises a securing unit and a lighting unit. The lighting unit is held together by U-shaped holding strips and secured between a frame body and a back plate of the securing unit.

From CN 102 691 918 A a coloured plane LED lamp is known. The LED light emitting source is positioned on the side edge of a light guide plate and fixed in a fixed framework. The coloured light transmission plate, the light guide plate, the reflection plate and the bottom plate are all fixed in the fixed framework by side edges.

The present invention thus refers to a panel light comprising a frame body having a (flat) front wall with an opening (i.e. a through-hole), and a sidewall at least partially surrounding the front wall. The panel light further comprises an LED-module extending along a first section of the sidewall. The panel light further comprises a light passage panel covering the opening to allow light emitted by the LED-module exiting the panel light via the light passage panel and the opening. The panel light further comprises a first spacer having two opposing surfaces being connected via a circumferential first side edge. The first spacer extends with a first side edge section above the first sidewall section. The panel light further comprises a second spacer having two opposing surfaces being connected via a circumferential second side edge, the second spacer extending with a second side edge section above a second sidewall section being opposite to the first sidewall section. In a preferred embodiment, the first spacer and the second spacer are identical. The first spacer has a first recessed side edge section opposite to and offset towards the first sidewall section. Like the first spacer, also the second spacer has a second recessed side edge section opposite to and offset towards the second wall section and facing the first recessed side edge section. At least part of the light passage panel extends between the first and second spacers such that opposite peripheral edge sections of the light passage panel are received by the first and second recessed side edge sections, respectively, to push the spaces towards the opposite first and second sidewall sections, respectively.

The use of the corresponding spacers allows for an easy alignment of the light passage panel with respect to the frame body by simply placing (part of) the light passage panel between the two spacers in the frame body. In a most preferred embodiment, this allows for an easy centralization of the light passage panel with respect to the frame body. The simple layout of the spacers thus also allows for an easy and accurate production of these spacers by known methods, like laser cutting, to provide a highly accurate layout with minimum tolerances and thus highest accuracy of positioning and alignment.

The first spacer comprises a third recessed side edge section to form a first gap between the first spacer and the first sidewall section in which at least part of the LED module is received for holding the LED module. This is preferably to align the light passage panel with respect to the LED module, to thus easily align the light source with respect to the light passage panel for most accurate lighting capabilities. The first gap may preferably extend longitudinally along the first sidewall section and thus allows accurate receipt of the LED-module.

The panel light may further comprise a further LED module extending along the second sidewall section. Hence, sufficient light input from two opposite sides allows for a most homogeneous light emission, if and as desired.

The second spacer may comprise a fourth recessed side edge section to form a second gap between the second spacer and the second sidewall section in which at least part of the further LED module is received for holding the further LED module, preferably to align the light passage panel with the further LED module. Like the first gap of the first spacer, also the second gap may preferably extend longitudinally along the second sidewall section to allow for most accurate receipt of the further LED module.

The LED module is preferably pushed by the light passage panel via the first spacer towards the first sidewall section. In case the further LED module is present, this can likewise be pushed by the light passage panel via the second spacer towards the second sidewall section. This allows for a highly accurate positioning and alignment of the LED modules.

The front wall may extend in a first plane, the light passage panel may extend in a second plane, and the first and second spacers may extend in a third plane. The respective elements thus have a compact because flattest possible layout. This allows for an easy handling as well as an easy production thereof, e.g. by laser cutting, to allow for obtaining most accurate elements with little tolerances. At least two or all of the first, second and third planes can be in parallel and the second and the third planes are identical to provide a most compact layout of the luminaire, i.e. the panel light.

The first spacer may be spanned between two opposing first support sections of the sidewall in a direction along the first sidewall section to align/centre the light passage panel with respect to the frame body (i.e. at least in the direction along the first sidewall section). Additionally or alternatively, the second spacer may be spanned between two opposing second support sections of the sidewall in a direction along the second sidewall section to align/centre the light passage panel with respect to the frame body (i.e. at least in the direction along the second sidewall section). Hence, the respective spacers can also be fixed with respect to the frame body in a direction orthogonal to the light emission or along the corresponding sidewall section receiving the respective LED module so that an overall alignment of the corresponding features is further increased.

The panel can have any shape but preferably has a rectangular (e.g. 300mm × 1200mm) or square (600mm x 600mm) shape so that the sidewall comprises four sides, wherein two opposite sides of these four sides comprise the first and second sidewall sections, respectively, and the other two opposite sides of the fourth sides comprise the first support sections as well as second support sections, respectively. The first spacer and/or the second spacer comprise a reflective surface at least on a side opposite to the front wall. Preferably, the first spacer and/or the second spacer are made of a reflective material. As the spacer is provided at least partially between the light passage panel and the LED module(s), efficiency of the light output can be increased by the spacers allowing reflection of light accordingly and preferably back into the light passage panel. Moreover, a mixing path can thus be provided allowing for a sufficient mixing of the light emitted by the LED module.

The LED module can be positioned to be in flat contact with the first sidewall section. If present, also the further LED module can be positioned to be in flat contact with the second sidewall section. This allows for a highly accurate positioning of the LED modules with respect to the frame body. Also, heat dissipation can thus be improved via the frame body, preferably if being made of a thermal (highly) conductive material.

The front wall and the sidewall preferably delimit an inner space of the panel light and thus allow for the luminaire elements, like the LED module(s) and the light passage panel, to be securely received in the frame body.

The LED module and, if present, the further LED module each may have at least one (O)LED or (O)LED cluster to emit light preferably towards the inner space. This allows for light emission designed according to the customer's needs.

The light passage panel may comprise one or a plurality of optical elements of the group consisting of a light guide panel, a luminaire cover like a clear cover, a diffusor panel, and a lens arrangement. In a preferred embodiment, a circumferential edge of the light guide panel, if present, faces the LED module and, if present, also the further LED module for inputting the light emitted by the respective LED module into the light guide panel and output the input light via the opening. If a plurality of the optical elements are provided, the optical elements can be arranged in a stack, and at least the optical element positioned closest to the front wall or the opening may comprise the opposite peripheral edge sections. The panel light can thus be equipped with any desired optical elements thus increasing the flexibility of the luminaire. Using a light guide as or as part of the light passage panel allows for a homogenous light distribution and emission via the opening.

The frame body may further comprise a rear cover panel provided opposite to the front wall with respect to the light passage panel to sandwich the light passage panel between the front wall and the rear cover panel. The rear cover panel thus supports and preferably also protects the light passage panel. The rear panel may further comprise mounting sections to mount the panel light to a mounting surface, like a wall or a ceiling.

A reflector can be provided at a side of the light passage panel being opposite to the opening, preferably between the rear cover panel and the light passage panel. It is also possible that the side of the rear cover panel facing the light passage panel can be reflective or provided with a reflector, preferably being coated with a reflective material. This allows for increased lighting efficiency of the panel light.

A receiving section may protrude from a rear lateral edge of the sidewall being opposite to the front wall, preferably at least partially along the first and/or second sidewall sections, towards an opposite side of the sidewall, to form a receiving area between the front wall and the receiving section for receiving a part of the light passage panel. Hence, it is possible to withhold the light passage panel within the body frame in an easy manner. The LED module(s) can preferably be positioned within the receiving area, so that the LED module(s) can thus be securely positioned within the frame body. The rear cover panel, if present, can be supported at the receiving section to thus best support the light passage panel inside the frame body to securely keep the alignment of the features positioned inside the frame body, like the light passage panel and the LED module(s), even upon a shock of the panel light or thermal expansion. As the rear cover panel is panel-shaped, it can, for instance, be easily bent to slip with an edge region under the (opposite) receiving section(s).

Further embodiments, features and advantages of the present invention are now described by the Figures of the enclosed drawings.
- Figure 1: shows a perspective rear view of the panel light according to a first embodiment of the present invention,
- Figure 2: shows a top rear view of a part of the panel light according to figure 1,
- Figure 3: shows a schematic perspective sectional view of the panel light according to figure 2, and
- Figure 4: shows a schematic top rear sectional view of the panel light according to figure 3.

The figures show an embodiment of a panel light 1 according to the present invention. As can be seen, the panel light 1 has a substantially flat layout and extends substantially in a plane. The panel light 1 of the embodiment has a rectangular shape in top view. However, the panel light 1 can also have another shape, like a rectangular shape, a circular shape, an oval shape or any other shape as required. However, a rectangular shape of the panel light 1 is most preferred.

The panel light comprises a frame body 2 having a (flat) front wall 20 with an opening 21. The frame body 2 further comprises a sidewall 22 at least partially and here completely surrounding the front wall 20. The front wall 20 can extend in a first plane. The front wall 20 and the sidewall 22 can, as shown in the embodiment, delimit an inner space I of the panel light 1.

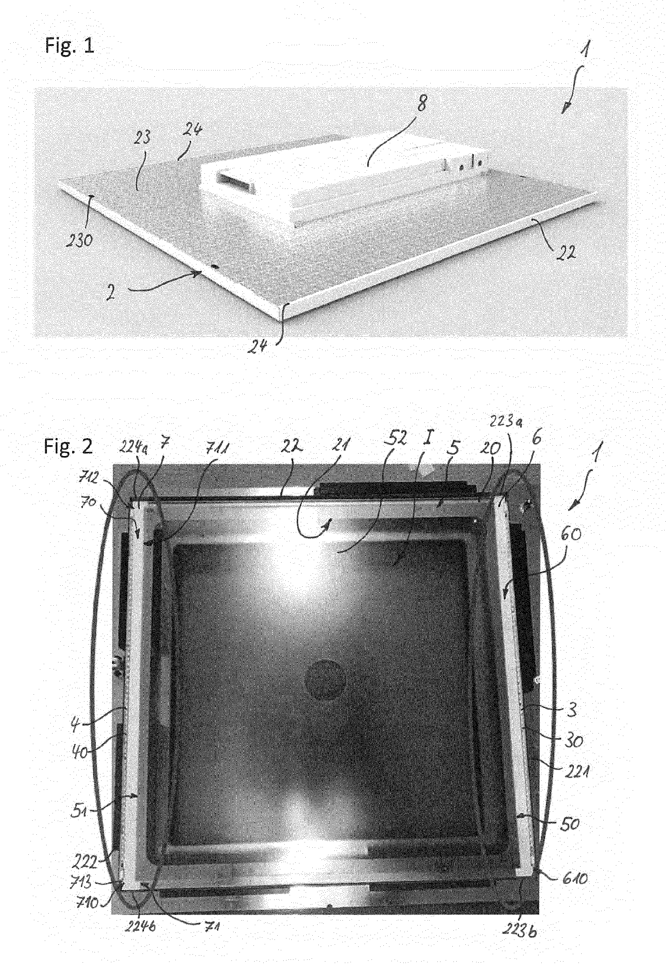

The pane light 1 further comprises an LED module 3 extending along a first section 221 of the sidewall 22. As can be best seen in Figure 2, the panel light 1 may further comprise a plurality of LED modules 3, 4. According to the embodiment, a further LED module 4 extending along a second sidewall section 222 is shown, which second sidewall section 222 here is opposite to the first sidewall section 221. The LED module 3 and the further LED module 4 each can have at least one LED or LED cluster 30, 40 to emit light preferably towards the inner space I.

As shown, the LED module 3 can preferably be positioned to be in flat contact with the first sidewall section 221. In the same manner, the further LED module 4 can also be positioned to be in flat contact with the second sidewall section 222.

The plane light 1 further comprises a light passage panel 5 covering the opening 21 to allow light emitted by the LED module 3 and, if present, the further LED module 4 to exit the panel light 1 via the light passage panel 5 and the opening 21.

The light passage panel 5 can comprise one or a plurality of optical elements of the group consisting of a light guide panel, a luminaire cover 52, like a clear cover, a diffusor panel, and a lens arrangement. The light passage panel 5 may also comprise any other type of optical elements and any combinations thereof. If a plurality of the optical elements are provided, the optical elements are preferably arranged in a stack. If the light passage panel 5 is or comprises a light guide panel, a circumferential edge of which preferably faces the LED module 3 and, if present, also the further LED module 4 for inputting the light emitted by the LED modules 3, 4 into the light guide panel and output the input light via the opening 21.

As can be seen in Figures 2 to 4, the panel light 1 further comprises a first spacer 6 and a second spacer 7. The first spacer 6 has two opposing surfaces, wherein only one of these surfaces 60 is shown in the Figures. The surface opposing surface 60 here faces the front wall 20 and is preferably in flat contact therewith. The two opposing surfaces 60 are connected via a circumferential first side edge 61. The first spacer 6 extends with a first side edge section 610 of the first side edge 61 above the first sidewall section 221. Similarly, also the second spacer 7 has two opposing surfaces, of which only one surface 70 is shown. The surface opposite to the shown surface 70 here faces the front wall 20 and is preferably in flat contact therewith. The two opposing surfaces 70 of the second spacer 7 are also connected via a circumferential second side edge 71. The second spacer 7 extends with a second side edge section 710 above the second sidewall section 222 being opposite to the first sidewall section 221.

The first spacer 6 has a first recessed side edge section 611 opposite to and offset towards the first sidewall section 221. Likewise the second spacer 7 has a second recessed side edge section 711 opposite to and offset towards the second sidewall section 222 and facing the first recessed side edge section 611.

At least part of the light passage panel 5 extends and thus completely spans between the first and second spacers 6, 7 as best shown in Figure 2, such that opposite peripheral edge sections 50, 51 of the light passage panel 5 are received by the first and second recessed side edge section 611, 711, respectively, to push the spaces 6, 7 towards the opposite first and second sidewall sections 221, 222, respectively.

The light passage panel 5 preferably extends in a second plane. Likewise, the first and second spacers 6, 7 extend in a third plane. Here, all of the first, second and third planes are in parallel and the second and third planes are identical with each other. If a plurality of the optical elements are provided, at least the optical element positioned closest to the front wall 20 or the opening 21, namely here the luminaire cover 52, comprises the opposite peripheral edge sections 50, 51 as, for instance, shown in Figure 2.

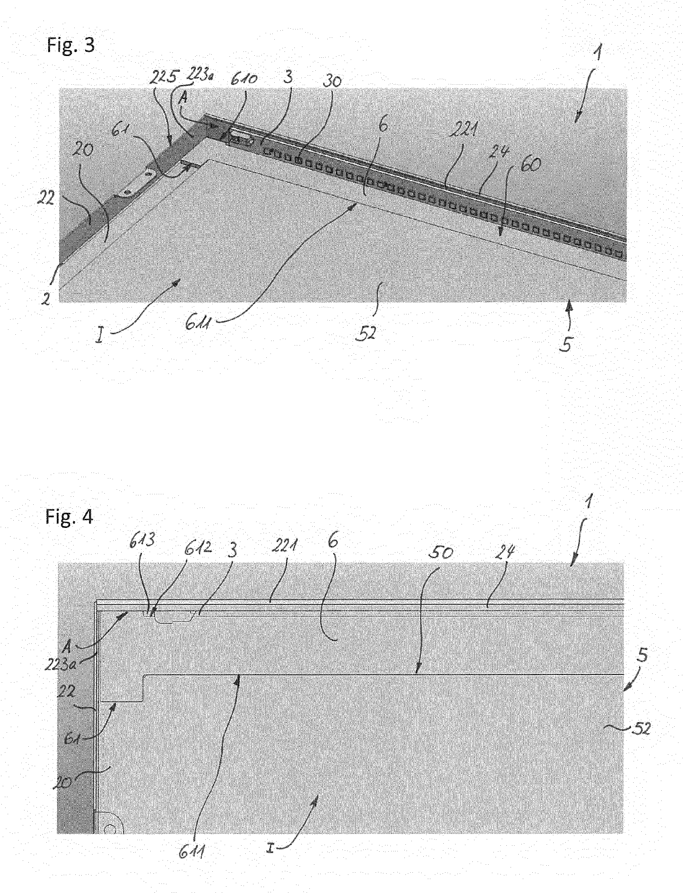

As can be clearly seen in Figures 3 and 4, the first spacer 6 can comprise a third recessed side edge section 612 to form a first gap 613 between the first spacer 6 and the first sidewall section 221 in which at least part of the LED module 3 is received for holding the LED module 3 and preferably to align the light passage panel 5 with the LED module 3. As can be seen in Figure 3, the first gap 613 here preferably extends longitudinally along the first sidewall section 221 to thus allow an accurate and sufficient receiving section for receiving here a side edge portion of the LED module 3 and to thus securely receive the LED module 3 within the first gap 613.

In the same manner, also the second spacer 7 can comprise a fourth recessed side edge section 712 to form a second gap 713 between the second spacer 7 and the second sidewall section 222 in which at least part of the further LED module 4 is received for holding the further LED module 4, preferably to align the light passage panel 5 with the further LED module 4. Like the first gap 613 preferably extends longitudinally along the first sidewall section 221, also the second gap 713 preferably extends longitudinally along the second sidewall section 222.

In a preferred embodiment, the LED module 3 is pushed by the light passage panel 5 via the first spacer 6 towards the first sidewall section 221. In the same manner, as shown by the embodiment of the Figures, preferably also the further LED module 4 is pushed by the light passage panel 5 via the second spacer 7 towards the second sidewall section 222. This allows for a flat contact of the LED modules 3, 4 with the frame body and thus secure positioning and preferably good heat dissipation.

As can be best seen in Figure 2, the first spacer 6 can be spanned between two opposing first support sections 223a, 223b of the sidewall 22 in a direction along the first sidewall section 221 to centre the light passage panel 5 with respect to the frame body 2. Additionally or alternatively, also the second spacer 7 can preferably be spanned between two opposing second support sections 224a, 224b of the sidewall 22 in a direction along the second sidewall section 222 to centre the light passage panel 5 with respect to the frame body 2.

As can be best seen in Figure 2, the first spacer 6 as well as the second spacer 7 can comprise a reflective surface at least on a side 60, 70 opposite to the front wall 20. In a preferred embodiment as shown, for instance, in Figure 2, the spacers 6 and 7 can also be made of a reflective material to thus allow an increased lighting efficiency as the spaces 6, 7 extend along the first part of the illumination path of the LED modules 3, 4, respectively.

The frame body 2 may further comprise a rear cover panel 23 as can be seen in Figure 1. The rear cover panel 23 is preferably provided opposite to the front wall 20 with respect to the light passage panel 5 to thus sandwich the light passage panel 5 between the front wall 20 and the rear cover panel 23. Here, the rear cover panel 23 may further carry electronic components 8 to run the panel light 1, preferably the LED modules 3, 4. Also, the rear cover panel 23 may comprise mounting sections 230 for mounting the panel light 1 to a mounting surface, like a wall or a ceiling.

A reflector can be provided at a side of the light passage panel 5 being opposite to the opening 21. Preferably, the reflector is provided between the rear cover panel 23 and the light passage panel 5. It is also possible that a side of the rear cover panel 23 facing the light passage panel 5 is reflective or provided with a reflector, preferably coated with a reflective material, to allow for an increased light output efficiency of the panel light 1.

A receiving section 24 can protrude from a rear lateral edge 225 of the sidewall 22 being opposite to the front wall 20, preferably at least partially along the first and/second sidewall sections 221, 222, towards an opposite side of the sidewall 22. Here, the receiving sections 24 extend along an entire side of the rectangular panel light 1 or frame body 2. The receiving section 24 may also be segmented. By the receiving section 24 protruding accordingly, a receiving area A between the front wall 20 and the receiving section 24 can be formed for receiving a part of the light passage panel 5, here opposing side edges thereof. The LED modules 3, 4 can, as exemplarily shown in Figures 2 to 4, preferably be positioned within the receiving area A and thus securely supported by the frame body 2. Also, the rear cover panel 23, if present, can be supported at the receiving section 24, preferably as being placed within the inner space I, to thus hold together the whole arrangement. If the rear cover panel 23 is provided to be received by the receiving section 24, the light passage panel 5 or its optical element(s) may have circumferential cut-out or set-back sections where the receiving sections 24 are provided to easily position these elements in the frame body 2. The rear cover panel 23 can then be flexibly bent to slip under the receiving section 24 or in the receiving area A for securely supporting the light passage panel 5 and thus the LED module(s) 3, 4 with respect to or within the frame body 2.

For instance, the luminaire cover 52 is positioned between the two spacers 6, 7 to push the same to opposite directions towards the respective first and second sidewall sections 221, 222 thereby also fixing the respective LED modules 3, 4. Further optical elements can be stacked with the luminaire cover 52 to form the light passage panel 5 and preferably, in top view, placed onto the first and second spacers 6, 7, to hold them in place. Preferably, this stack of optical elements comprises a light guide panel, the circumferential edge of which faces the LED modules 3, 4 to receive light emitted by the LED modules 3, 4 and provide it for light output via the opening 21. The rear cover panel 23 can then be placed at a rear side of the light passage panel 5 and preferably partially received within the receiving area A to thus hold together and support the whole assembly. This arrangement can then, if necessary, further securely fixed by applying fixing means, like screws. Hence, a self-aligned arrangement can be easily and simply provided.

The present invention is not limited to the embodiment described herein above as long as being covered by the appended claims.

## Claims

1. Panel light (1) comprising:
a frame body (2) having a front wall (20) with an opening (21), and a sidewall (22) at least partially surrounding the front wall (20),
an LED module (3) extending along a first section (221) of the sidewall (22),
a light passage panel (5) covering the opening (21) to allow light emitted by the LED module (3) exiting the panel light (1) via the light passage panel (5) and the opening (21),
**characterized in that**
the panel light (1) further comprises:
• a first spacer (6) having two opposing surfaces (60) being connected via a circumferential first side edge (61), the first spacer (6) extending with a first side edge section (610) above the first sidewall section (221),
• a second spacer (7) having two opposing surfaces being connected via a circumferential second side edge (71), the second spacer (7) extending with a second side edge section (710) above a second sidewall section (222) being opposite to the first sidewall section (221),
wherein the first spacer (6) has a first recessed side edge section (611) opposite to and offset towards the first sidewall section (221), and the second spacer (7) has a second recessed side edge section (711) opposite to and offset towards the second sidewall section (222) and facing the first recessed side edge section (611),
wherein at least part of the light passage panel (5) extends between the first and second spacers (6, 7) such that opposite peripheral edge sections (50, 51) of the light passage panel (5) are received by the first and second recessed side edge sections (611, 711), respectively, to push the spacers (6, 7) towards the opposite first and second sidewall sections (221, 222), respectively,and wherein the first spacer (6) comprises a third recessed side edge section (612) to form a first gap (613) between the first spacer (6) and the first sidewall section (221) in which at least part of the LED module (3) is received for holding the LED module (3).

2. Panel light (1) according to claim 1, wherein the at least part of the LED module (3) is received in the gap (613) for holding the LED module (3) to align the light passage panel (5) with the LED module (3), and/or wherein the first gap (613) extends longitudinally along the first sidewall section (221).

3. Panel light (1) according to any of the preceding claims, further comprising a further LED module (4) extending along the second sidewall section (222).

4. Panel light (1) according to claim 3, wherein the second spacer (7) comprises a fourth recessed side edge section (712) to form a second gap (713) between the second spacer (7) and the second sidewall section (222) in which at least part of the further LED module (4) is received for holding the further LED module (4), preferably to align the light passage panel (5) with the further LED module (4), wherein the second gap (713) preferably extends longitudinally along the second sidewall section (222).

5. Panel light (1) according to any of the preceding claims, wherein the LED module (3) is pushed by the light passage panel (5) via the first spacer (6) towards the first sidewall section (221), and wherein preferably the further LED module (4), if present, is pushed by the light passage panel (5) via the second spacer (7) towards the second sidewall section (222).

6. Panel light (1) according to any of the preceding claims, wherein the front wall (20) extends in a first plane, the light passage panel (5) extends in a second plane, the first and second spacers (6, 7) extend in a third plane, wherein at least two or all of the first, second and third planes are in parallel and wherein the second and third planes are identical.

7. Panel light (1) according to any of the preceding claims, wherein the first spacer (6) is spanned between two opposing first support sections (223a, 223b) of the sidewall (22) in a direction along the first sidewall section (221) to centre the light passage panel (5) with respect to the frame body (2), and/or wherein the second spacer (7)is spanned between two opposing second support sections (224a, 224b) of the sidewall (22) in a direction along the second sidewall section (222) to centre the light passage panel (5) with respect to the frame body (2).

8. Panel light (1) according to any of the preceding claims, wherein the first spacer (6) and/or the second spacer (7) comprise a reflective surface at least on a side (60, 70) opposite to the front wall (20), and preferably are made of a reflective material.

9. Panel light (1) according to any of the preceding claims, wherein the LED module (3) is positioned to be in flat contact with the first sidewall section (221), and wherein the further LED module (4), if present, is positioned to be in flat contact with the second sidewall section (222).

10. Panel light (1) according to any of the preceding claims, wherein the front wall (20) and the sidewall (22) delimit an inner space (I) of the panel light (1).

11. Panel light (1) according to any of the preceding claims, wherein the LED module (3) and, if present, also the further LED module (4) each have at least one LED or LED cluster (30, 40) to emit light preferably towards the inner space (I).

12. Panel light (1) according to any of the preceding claims, wherein the light passage panel (5) comprises one or a plurality of optical elements of the group consisting of:
• a light guide panel, a circumferential edge of which facing the LED module (3) and, if present, also the further LED module (4) for inputting the light emitted by the LED module(s) (3, 4) into the light guide panel and output the input light via the opening (21),
• a luminaire cover (52), like a clear cover,
• a diffusor panel,
• a lens arrangement,
wherein, if a plurality of the optical elements are provided, the optical elements are preferably arranged in a stack, and at least the optical element positioned closest to the front wall (20) or the opening (21) comprises the opposite peripheral edge sections (50, 51).

13. Panel light (1) according to any of the preceding claims, wherein the frame body (2) further comprises a rear cover panel (23) provided opposite to the front wall (20) with respect to the light passage panel (5) to sandwich the light passage panel (5) between the front wall (20) and the rear cover panel (23).

14. Panel light (1) according to any of the preceding claims, wherein a reflector is provided at a side of the light passage panel (5) being opposite to the opening (21), preferably between the rear cover panel (23), if present, and the light passage panel (5), or wherein the side of the rear cover panel (23), if present, facing the light passage panel (5) is reflective or provided with a reflector, preferably being coated with a reflective material.

15. Panel light (1) according to any of the preceding claims, wherein a receiving section (24) protrudes from a rear lateral edge (225) of the sidewall (22) being opposite to the front wall (20), preferably at least partially along the first and/or second sidewall sections (221, 222), towards an opposite side of the sidewall (22), to form a receiving area (A) between the front wall (20) and the receiving section (24) for receiving a part of the light passage panel (5), wherein the LED module(s) (3, 4) are preferably positioned within the receiving area (A), and wherein the rear cover panel (23), if present, is supported at the receiving section (24).

## Patentansprüche

1. Plattenleuchte (1), umfassend:
einen Rahmenkörper (2) mit einer Vorderwand (20), die eine Öffnung (21) aufweist, und einer Seitenwand (22), die die Vorderwand (20) zumindest teilweise umgibt,
ein LED-Modul (3), das sich entlang eines ersten Abschnitts (221) der Seitenwand (22) erstreckt, eine Lichtdurchtrittsplatte (5), die die Öffnung (21) bedeckt, um zu ermöglichen, dass von dem LED-Modul (3) emittiertes Licht die Plattenleuchte (1) über die Lichtdurchtrittsplatte (5) und die Öffnung (21) verlässt,
**dadurch gekennzeichnet, dass**
die Plattenleuchte (1) des Weiteren Folgendes umfasst:
• einen ersten Abstandhalter (6) mit zwei gegenüberliegenden Flächen (60), die über eine umlaufende erste Seitenkante (61) verbunden sind, wobei sich der erste Abstandhalter (6) mit einem ersten Seitenkantenabschnitt (610) oberhalb des ersten Seitenwandabschnitts (221) erstreckt,
• einen zweiten Abstandhalter (7), der zwei gegenüberliegende Flächen aufweist, die über eine umlaufende zweite Seitenkante (71) verbunden sind, wobei sich der zweite Abstandhalter (7) mit einem zweiten Seitenkantenabschnitt (710) oberhalb eines zweiten Seitenwandabschnitts (222) erstreckt, der dem ersten Seitenwandabschnitt (221) gegenüberliegt,
wobei der erste Abstandhalter (6) einen ersten vertieften Seitenkantenabschnitt (611) aufweist, der dem ersten Seitenwandabschnitt (221) gegenüberliegt und zu diesem hin versetzt ist, und der zweite Abstandhalter (7) einen zweiten vertieften Seitenkantenabschnitt (711) aufweist, der dem zweiten Seitenwandabschnitt (222) gegenüberliegt und zu diesem hin versetzt ist und dem ersten vertieften Seitenkantenabschnitt (611) zugewandt ist,
wobei sich zumindest ein Teil der Lichtdurchtrittsplatte (5) zwischen dem ersten und dem zweiten Abstandhalter (6, 7) derart erstreckt, dass gegenüberliegende Umfangskantenabschnitte (50, 51) der Lichtdurchtrittsplatte (5) jeweils von dem ersten und dem zweiten vertieften Seitenkantenabschnitt (611, 711) aufgenommen werden, um die Abstandhalter (6, 7) in Richtung des gegenüberliegenden ersten bzw. zweiten Seitenwandabschnitts (221, 222) zu schieben, und
wobei der erste Abstandhalter (6) einen dritten vertieften Seitenkantenabschnitt (612) zum Bilden eines ersten Spalts (613) zwischen dem ersten Abstandhalter (6) und dem ersten Seitenwandabschnitt (221) aufweist, in dem zumindest ein Teil des LED-Moduls (3) zum Halten des LED-Moduls (3) aufgenommen ist.

2. Plattenleuchte (1) nach Anspruch 1, wobei der zumindest eine Teil des LED-Moduls (3) in dem Spalt (613) zum Halten des LED-Moduls (3) aufgenommen ist, um die Lichtdurchtrittsplatte (5) mit dem LED-Modul (3) auszurichten, und/oder wobei sich der erste Spalt (613) in Längsrichtung entlang des ersten Seitenwandabschnitts (221) erstreckt.

3. Plattenleuchte (1) nach einem der vorhergehenden Ansprüche, ferner umfassend ein weiteres LED-Modul (4), das sich entlang des zweiten Seitenwandabschnitts (222) erstreckt.

4. Plattenleuchte (1) nach Anspruch 3, wobei der zweite Abstandhalter (7) einen vierten vertieften Seitenkantenabschnitt (712) zum Bilden eines zweiten Spalts (713) zwischen dem zweiten Abstandhalter (7) und dem zweiten Seitenwandabschnitt (222) aufweist, in dem zumindest ein Teil des weiteren LED-Moduls (4) zum Halten des weiteren LED-Moduls (4) aufgenommen ist, vorzugsweise um die Lichtdurchtrittsplatte (5) mit dem weiteren LED-Modul (4) auszurichten, wobei sich der zweite Spalt (713) vorzugsweise in Längsrichtung entlang des zweiten Seitenwandabschnitts (222) erstreckt.

5. Plattenleuchte (1) nach einem der vorhergehenden Ansprüche, wobei das LED-Modul (3) von der Lichtdurchtrittsplatte (5) mittels des ersten Abstandhalters (6) in Richtung des ersten Seitenwandabschnitts (221) geschoben wird, und wobei vorzugsweise das weitere LED-Modul (4), falls vorhanden, von der Lichtdurchtrittsplatte (5) mittels des zweiten Abstandhalters (7) in Richtung des zweiten Seitenwandabschnitts (222) geschoben wird.

6. Plattenleuchte (1) nach einem der vorhergehenden Ansprüche, wobei sich die Vorderwand (20) in einer ersten Ebene erstreckt, sich die Lichtdurchtrittsplatte (5) in einer zweiten Ebene erstreckt, sich der erste und der zweite Abstandhalter (6, 7) in einer dritten Ebene erstrecken, wobei zumindest zwei oder alle der ersten, zweiten und dritten Ebene parallel sind und wobei die zweite und die dritte Ebene identisch sind.

7. Plattenleuchte (1) nach einem der vorhergehenden Ansprüche, wobei der erste Abstandhalter (6) zwischen zwei gegenüberliegenden ersten Stützabschnitten (223a, 223b) der Seitenwand (22) in einer Richtung entlang des ersten Seitenwandabschnitts (221) gespannt ist, um die Lichtdurchtrittsplatte (5) in Bezug auf den Rahmenkörper (2) zu zentrieren, und/oder wobei der zweite Abstandhalter (7) zwischen zwei gegenüberliegenden zweiten Stützabschnitten (224a, 224b) der Seitenwand (22) in einer Richtung entlang des zweiten Seitenwandabschnitts (222) gespannt ist, um die Lichtdurchtrittsplatte (5) in Bezug auf den Rahmenkörper (2) zu zentrieren.

8. Plattenleuchte (1) nach einem der vorhergehenden Ansprüche, wobei der erste Abstandhalter (6) und/oder der zweite Abstandhalter (7) eine reflektierende Oberfläche zumindest auf einer Seite (60, 70) gegenüber der Vorderwand (20) aufweisen und vorzugsweise aus einem reflektierenden Material hergestellt sind.

9. Plattenleuchte (1) nach einem der vorhergehenden Ansprüche, wobei das LED-Modul (3) so positioniert ist, dass es in flachem Kontakt mit dem ersten Seitenwandabschnitt (221) ist, und wobei das weitere LED-Modul (4), falls vorhanden, so positioniert ist, dass es in flachem Kontakt mit dem zweiten Seitenwandabschnitt (222) ist.

10. Plattenleuchte (1) nach einem der vorhergehenden Ansprüche, wobei die Vorderwand (20) und die Seitenwand (22) einen Innenraum (I) der Plattenleuchte (1) begrenzen.

11. Plattenleuchte (1) nach einem der vorhergehenden Ansprüche, wobei das LED-Modul (3) und, falls vorhanden, auch das weitere LED-Modul (4) jeweils zumindest eine LED oder LED-Gruppe (30, 40) zum Emittieren von Licht vorzugsweise in Richtung des Innenraums (I) aufweisen.

12. Plattenleuchte (1) nach einem der vorhergehenden Ansprüche, wobei die Lichtdurchtrittsplatte (5) ein oder mehrere optische Elemente der Gruppe umfasst, die besteht aus:
• einer Lichtleiterplatte, deren Umfangskante dem LED-Modul (3) und, falls vorhanden, auch dem weiteren LED-Modul (4) zugewandt ist, um das von dem einen oder den mehreren LED-Modulen (3, 4) emittierte Licht in die Lichtleiterplatte einzugeben und das Eingabelicht über die Öffnung (21) auszugeben,
• eine Leuchtenabdeckung (52), wie eine klare Abdeckung,
• eine Diffusorplatte,
• eine Linsenanordnung,
wobei, wenn mehrere optische Elemente vorgesehen sind, die optischen Elemente vorzugsweise in einem Stapel angeordnet sind und zumindest das optische Element, das am nächsten zu der Vorderwand (20) oder der Öffnung (21) positioniert ist, die gegenüberliegenden Umfangskantenabschnitte (50, 51) umfasst.

13. Plattenleuchte (1) nach einem der vorhergehenden Ansprüche, wobei der Rahmenkörper (2) ferner eine hintere Abdeckplatte (23) umfasst, die gegenüber der Vorderwand (20) in Bezug auf die Lichtdurchtrittsplatte (5) vorgesehen ist, um die Lichtdurchtrittsplatte (5) zwischen der Vorderwand (20) und der hinteren Abdeckplatte (23) sandwichartig aufzunehmen.

14. Plattenleuchte (1) nach einem der vorhergehenden Ansprüche, wobei ein Reflektor an einer der Öffnung (21) gegenüberliegenden Seite der Lichtdurchtrittsplatte (5), vorzugsweise zwischen der hinteren Abdeckplatte (23), falls vorhanden, und der Lichtdurchtrittsplatte (5), vorgesehen ist, oder wobei die der Lichtdurchtrittsplatte (5) zugewandte Seite der hinteren Abdeckplatte (23), falls vorhanden, reflektierend oder mit einem Reflektor versehen ist, der vorzugsweise mit einem reflektierenden Material beschichtet ist.

15. Plattenleuchte (1) nach einem der vorhergehenden Ansprüche, wobei ein Aufnahmeabschnitt (24) von einer hinteren Seitenkante (225) der Seitenwand (22), die der Vorderwand (20) gegenüberliegt, vorsteht, vorzugsweise zumindest teilweise entlang des ersten und/oder des zweiten Seitenwandabschnitts (221, 222), in Richtung einer gegenüberliegenden Seite der Seitenwand (22), um einen Aufnahmebereich (A) zwischen der Vorderwand (20) und dem Aufnahmeabschnitt (24) zum Aufnehmen eines Teils der Lichtdurchtrittsplatte (5) zu bilden, wobei das eine oder die mehreren LED-Module (3, 4) vorzugsweise innerhalb des Aufnahmebereichs (A) positioniert sind, und wobei die hintere Abdeckplatte (23), falls vorhanden, an dem Aufnahmeabschnitt (24) abgestützt ist.

## Revendications

1. Dalle lumineuse (1), comprenant :
un corps formant cadre (2) ayant une paroi avant (20) présentant une ouverture (21), et une paroi latérale (22) entourant au moins partiellement la paroi avant (20),
un module de LED (3) s'étendant le long d'une première section (221) de la paroi latérale (22), un panneau de passage de lumière (5) recouvrant l'ouverture (21) pour permettre à la lumière émise par le module de LED (3) sortant de la dalle lumineuse (1) par l'intermédiaire du panneau de passage de lumière (5) et de l'ouverture (21),
**caractérisée en ce que**
la dalle lumineuse (1) comprend en outre :
• un premier élément d'espacement (6) ayant deux surfaces (60) en vis-à-vis reliées par l'intermédiaire d'un premier bord latéral circonférentiel (61), le premier élément d'espacement (6) s'étendant, par une première section de bord latéral (610), au-dessus de la première section de paroi latérale (221),
• un deuxième élément d'espacement (7) ayant deux surfaces en vis-à-vis reliées par l'intermédiaire d'un deuxième bord latéral circonférentiel (71), le deuxième élément d'espacement (7) s'étendant, par une deuxième section de bord latéral (710), au-dessus d'une deuxième section de paroi latérale (222) en vis-à-vis de la première section de paroi latérale (221),
dans laquelle le premier élément d'espacement (6) a une première section de bord latéral en retrait (611) en vis-à-vis de la première section de paroi latérale (221) et décalée vers celle-ci, et le deuxième élément d'espacement (7) a une deuxième section de bord latéral en retrait (711) en vis-à-vis de la deuxième section de paroi latérale (222) et décalée vers celle-ci, et faisant face à la première section de bord latéral en retrait (611),
dans laquelle au moins une partie du panneau de passage de lumière (5) s'étend entre les premier et deuxième éléments d'espacement (6, 7) de telle manière que des sections de bord périphérique (50, 51) du panneau de passage de lumière (5) en vis-à-vis l'une de l'autre sont respectivement reçues par les première et deuxième sections de bord latéral en retrait (611, 711) pour pousser les éléments d'espacement (6, 7) respectivement vers les première et deuxième sections de paroi latérale (221, 222) en vis-à-vis, et
dans laquelle le premier élément d'espacement (6) comprend une troisième section de bord latéral en retrait (612) permettant de former un premier écart (613), entre le premier élément d'espacement (6) et la première section de paroi latérale (221), dans lequel au moins une partie du module de LED (3) est reçue pour retenir le module de LED (3).

2. Dalle lumineuse (1) selon la revendication 1, dans laquelle l'au moins une partie du module de LED (3) est reçue dans l'écart (613) pour retenir le module de LED (3) afin d'aligner le panneau de passage de lumière (5) avec le module de LED (3), et/ou dans laquelle le premier écart (613) s'étend longitudinalement le long de la première section de paroi latérale (221).

3. Dalle lumineuse (1) selon l'une quelconque des revendications précédentes, comprenant en outre un module de LED supplémentaire (4) s'étendant le long de la deuxième section de paroi latérale (222).

4. Dalle lumineuse (1) selon la revendication 3, dans laquelle le deuxième élément d'espacement (7) comprend une quatrième section de bord latéral en retrait (712) permettant de former un deuxième écart (713), entre le deuxième élément d'espacement (7) et la deuxième section de paroi latérale (222), dans lequel au moins une partie du module de LED supplémentaire (4) est reçue pour retenir le module de LED supplémentaire (4), de préférence pour aligner le panneau de passage de lumière (5) avec le module de LED supplémentaire (4), dans laquelle le deuxième écart (713) s'étend de préférence longitudinalement le long de la deuxième section de paroi latérale (222).

5. Dalle lumineuse (1) selon l'une quelconque des revendications précédentes, dans laquelle le module de LED (3) est poussé par le panneau de passage de lumière (5) par l'intermédiaire du premier élément d'espacement (6) vers la première section de paroi latérale (221), et dans laquelle de préférence le module de LED supplémentaire (4), s'il est présent, est poussé par le panneau de passage de lumière (5) par l'intermédiaire du deuxième élément d'espacement (7) vers la deuxième section de paroi latérale (222).

6. Dalle lumineuse (1) selon l'une quelconque des revendications précédentes, dans laquelle la paroi avant (20) s'étend dans un premier plan, le panneau de passage de lumière (5) s'étend dans un deuxième plan, les premier et deuxième éléments d'espacement (6, 7) s'étendent dans un troisième plan, dans laquelle au moins deux voire l'ensemble des premier, deuxième et troisième plans sont parallèles et dans laquelle les deuxième et troisième plans sont identiques.

7. Dalle lumineuse (1) selon l'une quelconque des revendications précédentes, dans laquelle le premier élément d'espacement (6) s'inscrit entre deux premières sections de support (223a, 223b) de la paroi latérale (22) en vis-à-vis l'une de l'autre dans une direction longeant la première section de paroi latérale (221) pour centrer le panneau de passage de lumière (5) par rapport au corps formant cadre (2), et/ou dans laquelle le deuxième élément d'espacement (7) s'inscrit entre deux deuxièmes sections de support (224a, 224b) de la paroi latérale (22) en vis-à-vis l'une de l'autre dans une direction longeant la deuxième section de paroi latérale (222) pour centrer le panneau de passage de lumière (5) par rapport au corps formant cadre (2).

8. Dalle lumineuse (1) selon l'une quelconque des revendications précédentes, dans laquelle le premier élément d'espacement (6) et/ou le deuxième élément d'espacement (7) comprennent une surface réfléchissante au moins sur un côté (60, 70) en vis-à-vis de la paroi avant (20) et se composent de préférence d'un matériau réfléchissant.

9. Dalle lumineuse (1) selon l'une quelconque des revendications précédentes, dans laquelle le module de LED (3) est disposé de façon à être en contact plan avec la première section de paroi latérale (221), et dans laquelle le module de LED supplémentaire (4), s'il est présent, est disposé de façon à être en contact plan avec la deuxième section de paroi latérale (222).

10. Dalle lumineuse (1) selon l'une quelconque des revendications précédentes, dans laquelle la paroi avant (20) et la paroi latérale (22) délimitent un espace intérieur (I) de la dalle lumineuse (1).

11. Dalle lumineuse (1) selon l'une quelconque des revendications précédentes, dans laquelle le module de LED (3) et également, s'il est présent, le module de LED supplémentaire (4) ont chacun au moins une LED ou un groupe de LED (30, 40) pour émettre de la lumière de préférence vers l'espace intérieur (I).

12. Dalle lumineuse (1) selon l'une quelconque des revendications précédentes, dans laquelle le panneau de passage de lumière (5) comprend un ou une pluralité d'éléments optiques issus du groupe constitué de :
• un panneau guide de lumière, dont un bord circonférentiel fait face au module de LED (3) et également, s'il est présent, au module de LED supplémentaire (4), destiné à faire entrer la lumière émise par le ou les modules de LED (3, 4) dans le panneau de guide de lumière et à faire sortir la lumière d'entrée par l'intermédiaire de l'ouverture (21),
• un capot de luminaire (52), tel qu'un capot transparent,
• un panneau diffuseur,
• un agencement de lentilles,
dans laquelle, s'il est prévu une pluralité d'éléments optiques, les éléments optiques sont de préférence agencés en empilement, et au moins l'élément optique disposé le plus près de la paroi avant (20) ou de l'ouverture (21) comprend les sections de bord périphérique (50, 51) en vis-à-vis.

13. Dalle lumineuse (1) selon l'une quelconque des revendications précédentes, dans laquelle le corps formant cadre (2) comprend en outre un panneau de capot arrière (23) prévu en vis-à-vis de la paroi avant (20) par rapport au panneau de passage de lumière (5) pour prendre en sandwich le panneau de passage de lumière (5) entre la paroi avant (20) et le panneau de capot arrière (23) .

14. Dalle lumineuse (1) selon l'une quelconque des revendications précédentes, dans laquelle un réflecteur est prévu sur un côté du panneau de passage de lumière (5) qui est en vis-à-vis de l'ouverture (21), de préférence entre le panneau de capot arrière (23), s'il est présent, et le panneau de passage de lumière (5), ou dans laquelle le côté du panneau de capot arrière (23), s'il est présent, faisant face au panneau de passage de lumière (5) est réfléchissant ou est doté d'un réflecteur, en étant de préférence revêtu d'un matériau réfléchissant.

15. Dalle lumineuse (1) selon l'une quelconque des revendications précédentes, dans laquelle une section de réception (24) fait saillie à partir d'un bord latéral arrière (225) de la paroi latérale (22) qui est en vis-à-vis de la paroi avant (20), de préférence au moins partiellement le long des première et/ou deuxième sections de paroi latérale (221, 222), vers un côté en vis-à-vis de la paroi latérale (22), pour former une zone de réception (A) entre la paroi avant (20) et la section de réception (24) pour recevoir une partie du panneau de passage de lumière (5), dans laquelle le ou les modules de LED (3, 4) sont de préférence disposés à l'intérieur de la zone de réception (A), et dans laquelle le panneau de capot arrière (23), s'il est présent, est supporté au niveau de la section de réception (24).
